# EUROPEAN PATENT APPLICATION

(11) **EP 4 672 398 A1**
(43) Date of publication of application: **31.12.2025**
(21) Application number: 25174409.0
(22) Date of filing: 06.05.2025
(51) Int. Cl.: H01M 10/04, H01M 10/0525, H01M 10/0587

(54) **ELECTRODE BODY AND MANUFACTURING METHOD FOR THE SAME, AND MANUFACTURING METHOD FOR SECONDARY BATTERY**

(30) Priority: 28.06.2024 JP 2024104502
(71) Applicant: Prime Planet Energy & Solutions, Inc., Chuo-ku, Tokyo 103-0022 (JP)
(72) Inventor: KAWASHIMA, Keisuke, Tokyo, 103-0022 (JP); TSUKAMOTO, Kentaro, Tokyo, 103-0022 (JP); MAGARI, Yoshifumi, Tokyo, 103-0022 (JP)
(74) Representative: Kuhnen & Wacker Patent- und Rechtsanwaltsbüro PartG mbB

(57) **Abstract**

In an electrode body (20) disclosed herein, a positive electrode (22) with a band shape and a negative electrode (24) with a band shape are stacked in an insulated state and wound in a longitudinal direction (LD). An average of a central part moisture amount and an end part moisture amount in a winding axis (WL) direction is 80 ppm or more and 150 ppm or less and a difference between the central part moisture amount and the end part moisture amount in the winding axis (WL) direction is less than ±20 ppm. A corresponding method of manufacturing is also disclosed.

## Description

### BACKGROUND OF THE DISCLOSURE

### 1. Field

The present disclosure relates to an electrode body and a manufacturing method for the same, and a manufacturing method for a secondary battery.

### 2. Background

Conventionally, a secondary battery including a wound electrode body in which a positive electrode with a band shape and a negative electrode with a band shape are stacked in an insulated state and are wound in a longitudinal direction, and a nonaqueous electrolyte solution has been known. Conventional technical literatures related to this include Japanese Patent No. 6067545.

According to Japanese Patent No. 6067545, the amount of moisture in an end part of a negative electrode is increased to be more than the amount of moisture in a central part of the negative electrode by 200 ppm or more by using moisture that used to be prevented from mixing conventionally, so that the cycle durability of a secondary battery can be improved.

### SUMMARY

In secondary batteries that have increased in size recently, an electrode body has become long in width in a winding axis direction. If the electrode body is a wound electrode body, moisture enters and/or exits only through both end parts in the winding axis direction. Therefore, the distribution (variation) tends to occur in the amount of moisture in the winding axis direction. The present inventors' examination has newly proved that the thermal stability of the secondary battery decreases if the amount of moisture in the electrode body becomes too large or, on the contrary, too small locally.

The present disclosure has been made in view of the above circumstances, and an object is to provide an electrode body and a manufacturing method for the same, by which a secondary battery with excellent thermal stability can be obtained, and a manufacturing method for the secondary battery.

According to the present disclosure, an electrode body in which a positive electrode with a band shape and a negative electrode with a band shape are stacked in an insulated state and wound in a longitudinal direction is provided. The negative electrode includes a negative electrode active material layer whose width in a winding axis direction that is orthogonal to the longitudinal direction is 200 mm or more. The positive electrode includes a positive electrode active material layer whose width in the winding axis direction is less than or equal to that of the negative electrode active material layer. In this electrode body, an average of a central part moisture amount and an end part moisture amount in the winding axis direction is 80 ppm or more and 150 ppm or less and a difference between the central part moisture amount and the end part moisture amount in the winding axis direction is less than ±20 ppm.

By constructing a secondary battery using the electrode body described above, the secondary battery with excellent thermal stability can be obtained.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrode body according to an embodiment;
FIG. 2 is a schematic view illustrating a structure of an electrode body according to an embodiment;
FIG. 3 is a perspective view schematically illustrating a nonaqueous electrolyte solution secondary battery according to an embodiment;
FIG. 4 is a schematic longitudinal cross-sectional view taken along line IV-IV in FIG. 3; and
FIG. 5 is a plan view schematically illustrating an extraction position of a sample for measuring the amount of moisture.

### DETAILED DESCRIPTION OF THE PREFERRED EMBODIMENTS

Hereinafter, some preferred embodiments of the art disclosed herein will be described with reference to the drawings. Note that matters other than matters particularly mentioned in the present specification and necessary for the implementation of the present disclosure (for example, the general configuration and manufacturing process of an electrode body and a nonaqueous electrolyte solution secondary battery that do not characterize the present disclosure) can be grasped as design matters of those skilled in the art based on the prior art in the relevant field. The present disclosure can be implemented on the basis of the disclosure of the present specification and common technical knowledge in the relevant field. Note that in the present specification, the notation "A to B" for a range signifies a value more than or equal to A and less than or equal to B, and is meant to encompass also the meaning of being "more than A" and "less than B".

### <Electrode body 20>

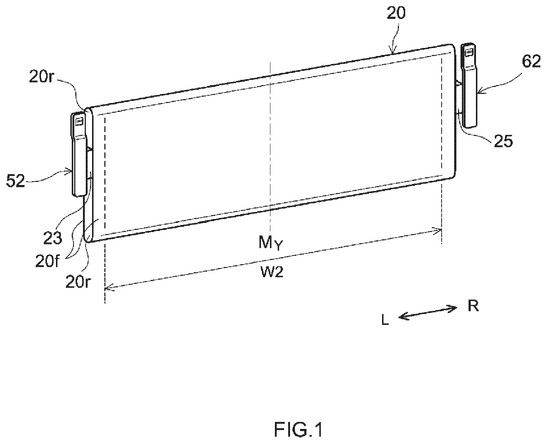

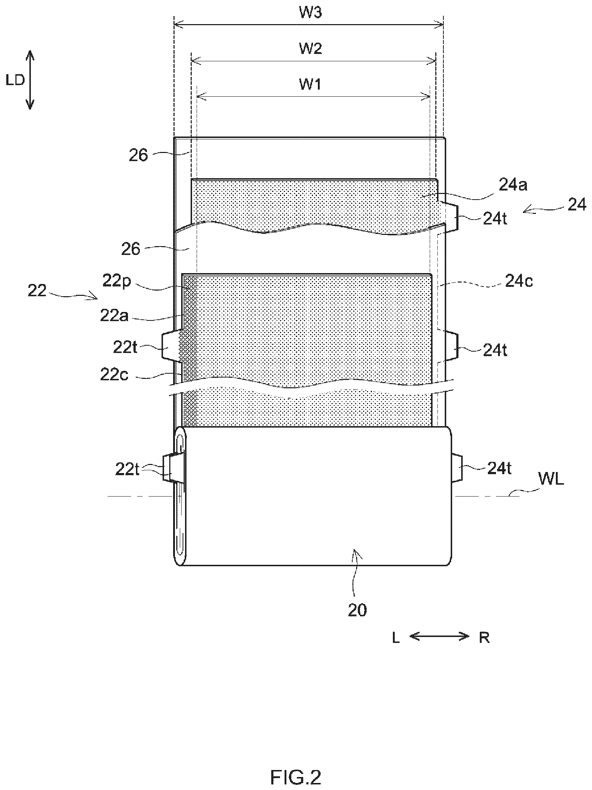

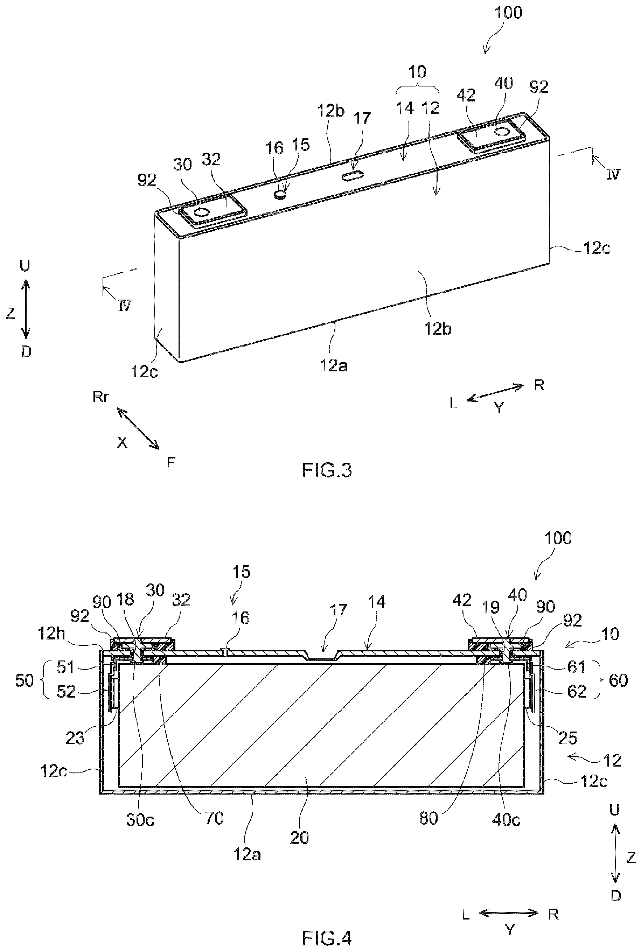

First, an electrode body 20 disclosed herein (see FIG. 1 and FIG. 2) will be described. The electrode body 20 is used for a nonaqueous electrolyte solution secondary battery (hereinafter also referred to a battery simply) 100 to be described below (see FIG. 3 and FIG. 4). In the present specification, the term "nonaqueous electrolyte solution secondary battery" refers to a general electrical energy storage device capable of being repeatedly charged and discharged by transfer of charge carriers between a positive electrode and a negative electrode through a nonaqueous electrolyte solution. The nonaqueous electrolyte solution secondary battery refers to a concept that encompasses a so-called secondary battery such as a lithium ion secondary battery or a nickel-hydrogen secondary battery, and moreover, a capacitor using a chemical reaction, such as a lithium ion capacitor or a pseudo-capacitor.

FIG. 1 is a perspective view schematically illustrating the electrode body 20. FIG. 2 is a schematic view illustrating a structure of the electrode body 20. Note that in the description below, a reference sign LD in the drawings denotes a longitudinal direction of the electrode body 20. As illustrated in FIG. 2, the electrode body 20 is a wound electrode body. The electrode body 20 has a structure in which a positive electrode 22 with a band shape and a negative electrode 24 with a band shape are stacked in an insulated state (here, through a separator 26 with a band shape) and wound in the longitudinal direction LD. When the electrode body 20 is the wound electrode body, moisture enters and/or exits only through both end parts in a winding axis WL direction. Therefore, the amount of moisture easily varies in the winding axis WL direction of the electrode body 20, particularly in a central part and an end part. Thus, it is particularly effective to apply the art disclosed herein.

Although not limited in particular, the number of winding turns (the number of turns) of the electrode body 20 is preferably 20 turns or more, and more preferably 30 turns or more, and may be 150 turns or less and 100 turns or less, for example.

As illustrated in FIG. 1, the external shape of the electrode body 20 is a flat shape here. The external shape of the electrode body 20 is preferably a flat shape. The electrode body 20 includes a pair of flat parts 20f expanding along the winding axis WL direction, and a pair of curved parts (R parts) 20r coupling the pair of flat parts 20f. The flat part 20f includes a flat outer surface. The curved part 20r includes a curved outer surface. Note that in the present specification, "flat outer surface" is not limited to a perfectly flat surface, and is a term that encompasses a case in which a small step, curve, concave part, convex part, or the like is included when viewed microscopically, for example.

A structure of the positive electrode 22 may be similar to the conventional one, without particular limitations. As illustrated in FIG. 2, the positive electrode 22 includes a positive electrode active material layer 22a. Here, the positive electrode 22 includes a positive electrode current collector 22c, and the positive electrode active material layer 22a and a positive electrode protection layer 22p that are fixed on at least one surface of the positive electrode current collector 22c. However, the positive electrode protection layer 22p is not essential, and can be omitted in another embodiment. The positive electrode current collector 22c has a band shape. The positive electrode current collector 22c is formed of, for example, a conductive metal such as aluminum, an aluminum alloy, nickel, or stainless steel. Here, the positive electrode current collector 22c is a metal foil, specifically an aluminum foil.

At one end part of the positive electrode current collector 22c in the winding axis WL direction (left end part in FIG. 2), a plurality of positive electrode tabs 22t are provided. Each of the plurality of positive electrode tabs 22t has a convex shape, and protrudes toward one side in the winding axis WL direction (left side in FIG. 2). The positive electrode tab 22t constitutes a part of the positive electrode current collector 22c here, and is made of a metal foil (aluminum foil). At least a part of the positive electrode tab 22t is a current collector exposing part in which the positive electrode active material layer 22a and the positive electrode protection layer 22p are not formed and the positive electrode current collector 22c is exposed. As illustrated in FIG. 1, the plurality of positive electrode tabs 22t are stacked at one end part in the winding axis WL direction (left end part in FIG. 1), and form a positive electrode tab group 23. A positive electrode second current collecting part 52 for electrically connecting with a positive electrode terminal 30 (see FIG. 3, FIG. 4) in the battery 100 is attached (specifically, joined) to the positive electrode tab group 23.

As illustrated in FIG. 2, the positive electrode active material layer 22a is provided to have a band shape along the longitudinal direction LD of the positive electrode current collector 22c with a band shape. The positive electrode active material layer 22a contains a positive electrode active material (for example, a lithium transition metal complex oxide such as a lithium nickel cobalt manganese complex oxide) capable of reversibly storing and releasing the charge carriers. The positive electrode active material layer 22a may contain any component other than the positive electrode active material, for example, a conductive material, a binder, various additive components, or the like. As the conductive material, for example, a carbon material such as acetylene black (AB) can be used. As the binder, for example, polyvinylidene fluoride (PVdF) or the like can be used.

Although not limited in particular, a width W1 of the positive electrode active material layer 22a in the winding axis WL direction (average value, excluding a part formed in the positive electrode tab 22t) is preferably 150 mm or more, more preferably 200 mm or more, and still more preferably 250 mm or more from the viewpoints of increasing the capacity, and the like. The width W1 of the positive electrode active material layer 22a is preferably less than or equal to a width W2 of a negative electrode active material layer 24a to be described below.

The positive electrode protection layer 22p is provided between the positive electrode current collector 22c and the positive electrode active material layer 22a in the winding axis WL direction as illustrated in FIG. 2. Here, the positive electrode protection layer 22p is provided at one end part (left end part in FIG. 2) of the positive electrode current collector 22c in the winding axis WL direction. The positive electrode protection layer 22p is formed to have a band shape along the positive electrode active material layer 22a. The positive electrode protection layer 22p contains inorganic filler (for example, alumina). The positive electrode protection layer 22p may contain an optional component other than the inorganic filler, such as a conductive material, a binder, or various additive components. The conductive material and the binder may be the same as those described as the examples that may be contained in the positive electrode active material layer 22a.

A structure of the negative electrode 24 may be similar to the conventional one, without particular limitations. As illustrated in FIG. 2, the negative electrode 24 includes the negative electrode active material layer 24a. Here, the negative electrode 24 includes a negative electrode current collector 24c and the negative electrode active material layer 24a that is fixed on at least one surface of the negative electrode current collector 24c. The negative electrode current collector 24c has a band shape. The negative electrode current collector 24c is formed of, for example, a conductive metal such as copper, a copper alloy, nickel, or stainless steel. Here, the negative electrode current collector 24c is a metal foil, specifically a copper foil.

At one end part of the negative electrode current collector 24c in the winding axis WL direction (right end part in FIG. 2), a plurality of negative electrode tabs 24t are provided. Each of the plurality of negative electrode tabs 24t has a convex shape, and protrudes toward one side in the winding axis WL direction (right side in FIG. 2). The negative electrode tab 24t constitutes a part of the negative electrode current collector 24c here, and is made of a metal foil (copper foil). At least a part of the negative electrode tab 24t is a current collector exposing part in which the negative electrode active material layer 24a is not formed and the negative electrode current collector 24c is exposed. As illustrated in FIG. 1, the plurality of negative electrode tabs 24t are stacked at one end part in the winding axis WL direction (right end part in FIG. 1) and form a negative electrode tab group 25. A negative electrode second current collecting part 62 for electrically connecting with a negative electrode terminal 40 (see FIG. 3, FIG. 4) in the battery 100 is attached (specifically, joined) to the negative electrode tab group 25.

As illustrated in FIG. 2, the negative electrode active material layer 24a is provided to have a band shape along the longitudinal direction LD of the negative electrode current collector 24c with a band shape. The negative electrode active material layer 24a contains a negative electrode active material (for example, a carbon material such as graphite) capable of reversibly storing and releasing the charge carriers. The negative electrode active material layer 24a may contain any component other than the negative electrode active material, for example, a binder, various additive components, or the like. As the binder, for example, rubbers such as styrene-butadiene rubber (SBR) or celluloses such as carboxymethyl cellulose (CMC) can be used.

The width W2 of the negative electrode active material layer 24a in the winding axis WL direction (average value, excluding a part formed in the negative electrode tab 24t) is 200 mm or more, and is preferably 250 mm or more from the viewpoints of increasing the capacity, and the like. As the width W2 of the negative electrode active material layer 24a is longer, the amount of moisture varies more easily in the winding axis WL direction of the electrode body 20, particularly in the central part and the end part. Furthermore, the amount of moisture tends to become locally too small in the central part. Accordingly, it is particularly effective to apply the art disclosed herein. The width W2 of the negative electrode active material layer 24a is preferably more than or equal to the width W1 of the positive electrode active material layer 22a. Although there is no particular limitation, the width W2 of the negative electrode active material layer 24a may be, for example, 1000 mm or less and 500 mm or less. Thus, the effect of the art disclosed herein can be achieved at the high level.

As illustrated in FIG. 2, the separator 26 is a member that insulates the positive electrode active material layer 22a of the positive electrode 22 and the negative electrode active material layer 24a of the negative electrode 24 from each other. A width W3 of the separator 26 in the winding axis WL direction is more than or equal to the width W2 of the negative electrode active material layer 24a in the winding axis WL direction. The structure of the separator 26 may be similar to the conventional one, without particular limitations. The separator 26 is preferably, for example, a porous sheet made of resin including polyolefin resin such as polyethylene (PE) or polypropylene (PP). The separator 26 may include a functional layer such as a heat resistance layer (HRL) or an adhesive layer on a surface of a base material part formed by a porous sheet made of resin. For example, the heat resistance layer is a layer including inorganic filler and a binder. The adhesive layer is a layer including a binder. The heat resistance layer may also serve as the adhesive layer. The structures of the heat resistance layer and the adhesive layer may be similar to the conventional structures thereof.

Incidentally, if a large amount of moisture is contained in the electrode body 20, a gas may be generated at the charging and discharging or the battery characteristic may deteriorate. In view of this, the moisture has been generally removed as much as possible at the manufacture of the battery 100. However, the present inventors' examination has proved newly that if the amount of moisture in the electrode body 20 becomes too large or, on the contrary, becomes too small locally, the thermal stability of the battery 100 decreases.

In view of this, in this embodiment, the average of a central part moisture amount Mc and an end part moisture amount Me in the electrode body 20, which are obtained in a procedure to be described below, is 80 to 150 ppm and additionally, the difference between the central part moisture amount Mc and the end part moisture amount Me in the electrode body 20 is less than ±20 ppm. That is to say, the unevenness in the amount of moisture between the central part and the end part of the electrode body 20 is reduced by having a predetermined amount of moisture contained substantially homogeneously in the winding axis WL direction. When the amount of moisture in the electrode body 20 satisfies the aforementioned range, the battery 100 with the excellent thermal stability can be obtained. The present inventors consider the reason as follows although the limited interpretation is not intended in particular.

That is to say, in the battery 100, the nonaqueous electrolyte solution is decomposed typically at the initial charging and a film (solid electrolyte interface film: SEI film) is formed on a surface of the negative electrode 24. As also described in Japanese Patent No. 6067545, the amount of moisture in the electrode body 20 can affect the amount of formation of the SEI film. When the average of the central part moisture amount Mc and the end part moisture amount Me in the electrode body 20 is 150 ppm or less, it is possible to suppress the decrease in the amount of formation of the SEI film due to the interruption of the permeation of the nonaqueous electrolyte solution with the moisture. In addition, when the average of the central part moisture amount Mc and the end part moisture amount Me in the electrode body 20 is 80 ppm or more, the moisture easily reacts with the nonaqueous electrolyte solution (for example, a nonaqueous solvent such as carbonates to be described below) to change into a stable inorganic film component (for example, lithium carbonate). Therefore, the SEI film with high quality is formed easily. Moreover, when the difference between the central part moisture amount Mc and the end part moisture amount Me in the electrode body 20 is reduced to be less than ±20 ppm, the SEI film is easily formed homogeneously in the winding axis WL direction at the initial charging. With the aforementioned effects in combination, the thermal stability of the battery 100 is considered to be improved.

Furthermore, when the average of the central part moisture amount Mc and the end **part moisture** amount Me in the electrode body 20 is 150 ppm or less, it is possible to suppress the elution of metal from the positive electrode current collector 22c due to the generation of corrosive HF from the reaction between the moisture and the nonaqueous electrolyte solution (for example, electrolyte salt such as LiPF₆ to be described below). Thus, the battery resistance can be reduced.

In the electrode body 20, the average of the central part moisture amount Mc and the end part moisture amount Me is preferably 140 ppm or less, more preferably 130 ppm or less, for example 120 ppm or less, 110 ppm or less, and particularly preferably 100 ppm or less. Thus, the SEI film is formed easily in a larger amount in the negative electrode 24, for example, and the thermal stability of the battery 100 can be improved more.

In some embodiments, it is preferable that the central part moisture amount Mc be more than the end part moisture amount Me (Me < Mc). Thus, the SEI film with the high quality containing the stable inorganic film component is formed easily in the central part in the winding axis WL direction, for example, and the thermal stability of the battery 100 can be improved more. The difference between both (Mc - Me) is preferably 5 ppm or more and more preferably 10 ppm or more. In the electrode body 20, however, the magnitude relation between the central part moisture amount Mc and the end part moisture amount Me is not limited, and in some other embodiments, the central part moisture amount Mc may be less than the end part moisture amount Me.

Although there is no particular limitation, the central part moisture amount Mc in the electrode body 20 is preferably 160 ppm or less, more preferably 150 ppm or less, still more preferably 140 ppm or less, for example 130 ppm or less, 120 ppm or less, 110 ppm or less, and particularly preferably 100 ppm or less. When the central part moisture amount Mc is the predetermined value or less, the SEI film can be formed easily in a larger amount in the central part in the winding axis WL direction, for example, and the thermal stability of the **battery** 100 can be improved more. In addition, the end part moisture amount Me in the electrode body 20 is preferably 140 ppm or less, more preferably 130 ppm or less, still more preferably 120 ppm or less, for example 110 ppm or less, 100 ppm or less, and particularly preferably 90 ppm or less. When the end part moisture amount Me is the predetermined value or less, the SEI film can be formed easily in a larger amount in the end part in the winding axis WL direction, and the thermal stability of the battery 100 can be improved more.

Note that the amount of moisture in the electrode body 20 can be obtained as follows. That is to say, first, the electrode body 20 as illustrated in FIG. 2 is unwound, and then the positive electrode 22 and the negative electrode 24 existing at an intermediate peripheral part in the longitudinal direction LD are cut out for each turn. Next, as for the positive electrode active material layer 22a of the positive electrode 22, a test piece with a predetermined size

(for example, 20 mm × 20 mm) is cut out at each of the central part and both end parts in the winding axis WL direction. Similarly, as for the negative electrode active material layer 24a of the negative electrode 24, a test piece with a predetermined size (for example, 20 mm × 20 mm) is cut out at each of the central part and both end parts in the winding axis WL direction. Note that "the central part" in the winding axis WL direction refers to a part including a

center M_{Y} (see FIG. 1) in the winding axis WL direction (a part corresponding to a half of the entire width from the endmost part (edge part) of the active material layer in the winding axis WL direction) and "the end part" in the winding axis WL direction refers to a part about 5 mm on the inside from the endmost part (edge part) of the active material layer in the winding axis WL direction. The number of test pieces is preferably more than one (two or more) at each measurement point and is more preferably three or more. Next, in the cutout test piece, the amount of moisture vaporized at a heating temperature from room temperature to 150°C is quantized in accordance with a Karl-Fisher method (typically, moisture vaporization method-coulometric titration method).

Then, the value of the amount of moisture in the central part of the positive electrode active material layer 22a and the value of the amount of moisture in the central part of the negative electrode active material layer 24a are subjected to arithmetic averaging and thus, the obtained value is calculated as "the central part moisture amount Mc" in the electrode body 20. In addition, the value of the amount of moisture in the end part of the positive electrode active material layer 22a and the value of the amount of moisture in the end part of the negative electrode active material layer 24a are subjected to arithmetic averaging and thus, the obtained value is calculated as "the end part moisture amount Me" in the electrode body 20.

Note that the amount of moisture in the electrode body 20 (central part moisture amount Mc and/or end part moisture amount Me) can be suitably adjusted depending on conditions in a manufacturing step (step 2), conditions in a moisture absorbing step (step 3), conditions in a subsequent drying step (step 5), and the like in a manufacturing method to be described below, for example. In particular, the amount of moisture in the electrode body 20 can be suitably adjusted by the humidity in the moisture absorbing step (step 3), or the heating temperature or the degree of vacuum in the drying step (step 5).

### <Battery 100>

Next, the battery 100 including the electrode body 20 disclosed herein will be described. FIG. 3 is a perspective view of the battery 100. FIG. 4 is a schematic longitudinal cross-sectional view taken along line IV-IV in FIG. 3. In the following description, reference signs L, R, F, Rr, U, and D in the drawings respectively denote left, right, front, rear, up, and down, and reference signs X, Y, and Z in the drawings respectively denote a thickness direction of the battery 100, a width direction that is orthogonal to the thickness direction, and an up-down direction that is orthogonal to the thickness direction and the width direction. These directions are defined however for convenience of explanation, and do not limit the manner in which the battery 100 is disposed.

As illustrated in FIG. 4, the battery 100 includes a case 10, the positive electrode terminal 30, the negative electrode terminal 40, a positive electrode current collecting part 50, a negative electrode current collecting part 60, and a nonaqueous electrolyte solution (not illustrated) in addition to the electrode body 20 here. The battery 100 is a lithium ion secondary battery here. The battery 100 is preferably the lithium ion secondary battery.

The case 10 is a housing that accommodates the electrode body 20 and the nonaqueous electrolyte solution. As illustrated in FIG. 3, the external shape of the case 10 here is a flat and bottomed cuboid shape (rectangular shape). A conventionally used material can be used for the case 10, without particular limitations. The case 10 is preferably made of a metal, and for example, more preferably made of aluminum, an aluminum alloy, iron, an iron alloy, or the like. As illustrated in FIG. 4, the case 10 includes an exterior body 12 having an opening 12h, and a sealing plate (lid body) 14 that covers the opening 12h here. The case 10 preferably includes the exterior body 12 and the sealing plate 14.

As illustrated in FIG. 3, the exterior body 12 includes a bottom wall 12a with a substantially rectangular shape, a pair of long side walls 12b extending from long sides of the bottom wall 12a and facing each other, and a pair of short side walls 12c extending from short sides of the bottom wall 12a and facing each other. The bottom wall 12a faces the opening 12h. The long side wall 12b is larger in area than the short side wall 12c.

As illustrated in FIG. 3, the sealing plate 14 is substantially rectangular in shape in a plan view. As illustrated in FIG. 4, the sealing plate 14 is attached to the exterior body 12 so as to cover the opening 12h of the exterior body 12. The sealing plate 14 faces the bottom wall 12a of the exterior body 12. The case 10 is unified in a manner that the sealing plate 14 is joined (for example, joined by welding) to a periphery of the opening 12h of the exterior body 12. The case 10 is hermetically sealed (closed).

As illustrated in FIG. 4, the sealing plate 14 is provided with a liquid injection hole 15, a gas discharge valve 17, and two terminal extraction holes 18 and 19. The liquid injection hole 15 is a hole for injecting the nonaqueous electrolyte solution after the sealing plate 14 is assembled to the exterior body 12. The sealing plate 14 is preferably provided with the liquid injection hole 15. The liquid injection hole 15 is sealed by a sealing member 16. The gas discharge valve 17 is configured to break when pressure inside the case 10 reaches a predetermined value or more and discharge a gas in the case 10 to the outside. The terminal extraction holes 18 and 19 are formed in both end parts of the sealing plate 14 in the width direction Y (left end part and right end part in FIG. 4, respectively). The terminal extraction holes 18 and 19 penetrate the sealing plate 14 in a thickness direction (up-down direction Z). The terminal extraction holes 18 and 19 respectively have the inner diameters that enable penetration of the positive electrode terminal 30 and the negative electrode terminal 40 before the electrode terminals are attached to the sealing plate 14 (before a caulking process).

Each of the positive electrode terminal 30 and the negative electrode terminal 40 is fixed to the sealing plate 14 of the case 10. The positive electrode terminal 30 is disposed on one side of the sealing plate 14 in the width direction Y (left side in FIG. 3 and FIG. 4). The negative electrode terminal 40 is disposed on the other side of the sealing plate 14 in the width direction Y (right side in FIG. 3 and FIG. 4). As illustrated in FIG. 4, the positive electrode terminal 30 is inserted to the terminal extraction hole 18 and extends to the outside from the inside of the sealing plate 14, and the negative electrode terminal 40 is inserted to the terminal extraction hole 19 and extends to the outside from the inside of the sealing plate 14. The positive electrode terminal 30 and the negative electrode terminal 40 are preferably attached to the sealing plate 14. The positive electrode terminal 30 and the negative electrode terminal 40 are here caulked to a peripheral part of the sealing plate 14 that surrounds the terminal extraction holes 18 and 19 by the caulking process. Caulking parts 30c and 40c are formed at an end part of the positive electrode terminal 30 and the negative electrode terminal 40 on the exterior body 12 side (lower end part in FIG. 4).

As illustrated in FIG. 4, the positive electrode terminal 30 is electrically connected to the positive electrode 22 (see FIG. 2, specifically, the positive electrode tab group 23) of the electrode body 20 through the positive electrode current collecting part 50 inside the case 10. The positive electrode terminal 30 is insulated from the sealing plate 14 by a positive electrode insulating member 70 and a gasket 90. The positive electrode terminal 30 is preferably formed of a metal and is more preferably formed of, for example, aluminum or an aluminum alloy.

The negative electrode terminal 40 is electrically connected to the negative electrode 24 (see FIG. 2, specifically, the negative electrode tab group 25) of the electrode body 20 through the negative electrode current collecting part 60 inside the case 10. The negative electrode terminal 40 is insulated from the sealing plate 14 by a negative electrode insulating member 80 and the gasket 90. The negative electrode terminal 40 is preferably formed of a metal and is more preferably formed of, for example, copper or a copper alloy. The negative electrode terminal 40 may be configured of two conductive members joined together and integrated. In the negative electrode terminal 40, for example, a part connected to the negative electrode current collecting part 60 may be formed of copper or a copper alloy, and a part exposed on an outer surface of the sealing plate 14 may be formed of aluminum or an aluminum alloy.

A positive electrode external conductive member 32 and a negative electrode external conductive member 42, each having a plate shape, are attached to the outer surface of the sealing plate 14. The positive electrode external conductive member 32 and the negative electrode external conductive member 42 are members to which a busbar is attached when a plurality of the batteries 100 are electrically connected to each other. The positive electrode external conductive member 32 is electrically connected to the positive electrode terminal 30. The negative electrode external conductive member 42 is electrically connected to the negative electrode terminal 40. The positive electrode external conductive member 32 and the negative electrode external conductive member 42 are insulated from the sealing plate 14 by an external resin member 92. The positive electrode external conductive member 32 and the negative electrode external conductive member 42 are preferably formed of a metal and are more preferably formed of, for example, aluminum or an aluminum alloy. However, the positive electrode external conductive member 32 and the negative electrode external conductive member 42 are not always necessary and can be omitted in another embodiment.

As illustrated in FIG. 4, the electrode body 20 is accommodated inside the case 10 (in detail, inside the exterior body 12). The number of electrode bodies 20 to be disposed inside one case 10 is not limited in particular, and may be one, or two or more (plural). The electrode body 20 may be disposed inside the case 10 in a state of being covered with an electrode body holder with an insulating property. The electrode body holder is preferably made of resin.

As illustrated in FIG. 4, the electrode body 20 here is disposed inside the case 10 in a direction in which the winding axis WL is substantially parallel to the width direction Y. The winding axis WL direction is a direction that coincides with the width direction Y here. The electrode body 20 is disposed inside the case 10 in a direction in which the winding axis WL is parallel to the bottom wall 12a and orthogonal to the short side wall 12c.

The electrode body 20 here has a so-called lateral tab structure in which the positive electrode tab group 23 and the negative electrode tab group 25 exist on both ends in the winding axis WL direction (left and right in FIG. 1 and FIG. 4). In another embodiment, however, the electrode body 20 may have a so-called upper tab structure in which the positive electrode tab group 23 and the negative electrode tab group 25 exist on one end in the winding axis WL direction (for example, upper end part in FIG. 1 and FIG. 4). In this case, the winding axis WL direction may be a direction that coincides with the up-down direction Z.

As illustrated in FIG. 1 and FIG. 4, the pair of flat parts 20f of the electrode body 20 face the pair of long side walls 12b of the exterior body 12. The flat part 20f extends along the long side wall 12b. The pair of curved parts 20r of the electrode body 20 face the bottom wall 12a of the exterior body 12 and the sealing plate 14. The electrode body 20 is preferably disposed inside the case 10 in a manner that the stacking direction (thickness direction) of the positive electrode 22 (see FIG. 2) and the negative electrode 24 (see FIG. 2) of the flat part 20f coincides with the thickness direction X (direction perpendicular to the long side wall 12b), as described in this embodiment.

As illustrated in FIG. 4, the positive electrode current collecting part 50 forms a conductive path for electrically connecting the positive electrode terminal 30 and the positive electrode tab group 23 formed by the plurality of positive electrode tabs 22t. The positive electrode current collecting part 50 may be formed of the same metal species as the positive electrode current collector 22c, for example, a conductive metal such as aluminum, an aluminum alloy, nickel, or stainless steel. The positive electrode current collecting part 50 includes a positive electrode first current collecting part 51 and the positive electrode second current collecting part 52. The positive electrode first current collecting part 51 is attached to an inner surface of the sealing plate 14. The positive electrode second current collecting part 52 extends along the short side wall 12c of the exterior body 12. The positive electrode second current collecting part 52 is attached to the positive electrode tab group 23 of the electrode body 20.

As illustrated in FIG. 4, the negative electrode current collecting part 60 forms a conductive path for electrically connecting the negative electrode terminal 40 and the negative electrode tab group 25 formed by the plurality of negative electrode tabs 24t. The negative electrode current collecting part 60 may be formed of the same metal species as the negative electrode current collector 24c, for example, a conductive metal such as copper, a copper alloy, nickel, or stainless steel. The negative electrode current collecting part 60 includes a negative electrode first current collecting part 61 and the negative electrode second current collecting part 62. The structure and arrangement of the negative electrode first current collecting part 61 and the negative electrode second current collecting part 62 may be similar to those of the positive electrode first current collecting part 51 and the positive electrode second current collecting part 52 of the positive electrode current collecting part 50, respectively. The negative electrode second current collecting part 62 is attached to the negative electrode tab group 25 of the electrode body 20.

The nonaqueous electrolyte solution typically contains a nonaqueous solvent and an electrolyte salt (supporting salt). As the nonaqueous solvent, one kind or two or more kinds of nonaqueous solvents that have conventionally been known as being usable for this kind of application can be used. Examples of the nonaqueous solvent include organic solvents such as carbonates, ethers, esters, nitriles, sulfones, and lactones. The nonaqueous solvent preferably includes the carbonates. Examples of the carbonates include chain carbonates such as dimethyl carbonate (DMC), diethyl carbonate (DEC), and ethyl methyl carbonate (EMC) and cyclic carbonates such as ethylene carbonate (EC) and propylene carbonate (PC).

The electrolyte salt is not limited to a particular type as long as the charge carriers (typically, lithium ion) are included, and one kind or two or more kinds of electrolyte salts that have conventionally been known as being usable for this kind of application can be used. One example of the electrolyte salt is fluorine-containing lithium salt such as LiPF₆ or LiBF₄. The electrolyte salt preferably contains LiPF₆.

The nonaqueous electrolyte solution may further contain an additional component (additive). As the additive, one kind or two or more kinds of additives that have conventionally been known as being able to be added to the nonaqueous electrolyte solution can be used. Examples thereof include a boron-based additive containing a boron element, such as lithium bisoxalate borate (LiBOB) or lithium difluoro(oxalato)borate (LiODFB), and the like. The additive may be a so-called film formation agent that is decomposed before (at a lower potential than) the nonaqueous solvent and/or the electrolyte salt at the initial charging and deposited as a film on the surface of the negative electrode active material layer 24a.

Note that the additive in the nonaqueous electrolyte solution (for example, the boron-based additive described above) is typically decomposed electrically by the initial charging or the like and consumed to form the film on the negative electrode active material layer 24a or the like. Therefore, in the state of the battery 100, the additive as described above may be included (remain) or may not be included in the nonaqueous electrolyte solution.

### <Manufacturing method for electrode body 20 and battery 100>

For example, the battery 100 as described above can be manufactured by a manufacturing method including the following steps in the following order, for example: a preparing step (step 1), the manufacturing step (step 2), the moisture absorbing step (step 3), an accommodating step (step 4), the drying step (step 5), a liquid injecting step (step 6), an initial charging step (step 7), a defoaming step (step 8), a sealing step (step 9), and an aging step (step 10). The accommodating step (step 4) and the liquid injecting step (step 6) are one example of a constructing step.

However, the moisture absorbing step (step 3), the defoaming step (step 8), and the aging step (step 10) are optional and can be omitted in another embodiment. The order of the accommodating step (step 4) and the drying step (step 5) may be opposite. Additionally, another step may be included at an optional stage. The preparing step (step 1), the manufacturing step (step 2), and the drying step (step 4) can be grasped as a manufacturing method for the electrode body 20.

The preparing step (step 1) includes a positive electrode preparing step (step 1A) of preparing the positive electrode 22 with a band shape including the positive electrode active material layer 22a, and a negative electrode preparing step (step 1B) of preparing the negative electrode 24 with a band shape including the negative electrode active material layer 24a. The positive electrode 22 with a band shape and the negative electrode 24 with a band shape may be obtained by purchasing commercial products or manufacturing the electrodes by oneself.

The positive electrode preparing step (step 1A) includes, for example, a positive electrode mixture slurry preparing step (step 1A-1), a positive electrode mixture slurry applying step (step 1A-2), and a positive electrode mixture slurry drying step (step 1A-3) in this order. The positive electrode preparing step (step 1A) may further include a pressing step of pressing the positive electrode active material layer.

In the positive electrode mixture slurry preparing step (step 1A-1), a positive electrode mixture slurry including at least the positive electrode active material is prepared. Specifically, a solid content material of the positive electrode active material layer 22a as described above (for example, the positive electrode active material, the conductive material, the binder, various additive components, or the like) is mixed with a predetermined solvent. As the solvent, a nonaqueous solvent such as N-methyl-2-pyrrolidone (NMP) is preferable. The solid content ratio of the positive electrode mixture slurry is preferably 70 mass% or more and more preferably 70 to 85 mass%, for example. In this specification, the term "slurry" refers to a mixture in which the solid content is partially or entirely dispersed in the solvent and encompasses a paste, an ink, and the like.

In the positive electrode mixture slurry applying step (step 1A-2), the positive electrode mixture slurry prepared as above is applied to the positive electrode current collector 22c with a band shape. The positive electrode mixture slurry can be applied using a conventionally known applying device, such as a gravure coater, a coma coater, a slit coater, or a die coater. The applying conditions may also be similar to the conventional conditions. The applying width of the positive electrode mixture slurry is more than or equal to the applying width of a negative electrode mixture slurry.

In the positive electrode mixture slurry drying step (step 1A-3), the positive electrode current collector 22c with the positive electrode mixture slurry applied (coated) thereon is subjected to a conventionally known drying method, such as air drying, heat drying, or vacuum drying, to remove the solvent from the positive electrode mixture slurry on the positive electrode current collector 22c. From the viewpoint of the manufacturing efficiency, the heat drying can be suitably employed. The heating temperature is preferably set to 75 to 125°C, although depending on the kind of solvent to be used in the positive electrode mixture slurry preparing step, for example, and it is more preferable that the temperature be gradually increased in this temperature range. In this manner, the positive electrode active material layer 22a including the positive electrode active material is fixed on at least one surface of the positive electrode current collector 22c, so that the positive electrode 22 with a band shape can be obtained.

The negative electrode preparing step (step 1B) includes, for example, a negative electrode mixture slurry preparing step (step 1B-1), a negative electrode mixture slurry applying step (step 1B-2), and a negative electrode mixture slurry drying step (step 1B-3) in this order. The negative electrode preparing step (step 1B) may further include a pressing step of pressing the negative electrode active material layer.

In the negative electrode mixture slurry preparing step (step 1B-1), the negative electrode mixture slurry including at least the negative electrode active material is prepared. Specifically, a solid content material of the negative electrode active material layer 24a as described above (for example, the negative electrode active material, the binder, various additive components, or the like) is mixed with a predetermined solvent. As the solvent, an aqueous solvent such as ion exchanged water is preferable. The solid content ratio of the negative electrode mixture slurry is preferably 50 mass% or more and more preferably 50 to 65 mass%, for example.

In the negative electrode mixture slurry applying step (step 1B-2), the negative electrode mixture slurry prepared as above is applied to the negative electrode current collector 24c with a band shape. The negative electrode mixture slurry can be applied using a conventionally known applying device in accordance with the application of the positive electrode mixture slurry. The applying width of the negative electrode mixture slurry is 200 mm or more.

In the negative electrode mixture slurry drying step (step 1B-3), the negative electrode current collector 24c with the negative electrode mixture slurry applied (coated) thereon is subjected to a conventionally known drying method to remove the solvent from the negative electrode mixture slurry on the negative electrode current collector 24c. From the viewpoint of the manufacturing efficiency, the heat drying can be suitably employed. The heating temperature is preferably set to 60 to 130°C, although depending on the kind of solvent to be used in the negative electrode mixture slurry preparing step, for example, and it is more preferable that the temperature be gradually increased in this temperature range. In this manner, the negative electrode active material layer 24a including the negative electrode active material is fixed on at least one surface of the negative electrode current collector 24c, so that the negative electrode 24 with a band shape can be obtained.

In the manufacturing step (step 2), the positive electrode 22 with a band shape and the negative electrode 24 with a band shape prepared in the aforementioned preparing step are stacked and wound in the insulated state (for example, through the separator 26 with a band shape that is prepared separately); thus, the wound body is manufactured. The wound body can be manufactured by winding the positive electrode 22 with a band shape, the negative electrode 24 with a band shape, and the separator 26 with a band shape in a roll shape using the winding axis WL as a center with the use of, for example, a conventionally known winding device. Note that the wound body obtained in this step (the wound body before the moisture absorbing step) can be in a state of containing moisture substantially homogeneously in the central part and the end part in the winding axis WL direction.

In the moisture absorbing step (step 3), the wound body in a roll shape is placed in an environment where moisture exists so that the wound body absorbs moisture from the end part in the winding axis WL direction. Thus, for example, even if the amount of moisture in the electrode bodies 20 varies for each lot before the manufacturing step, the variation of the amount of moisture for each lot can be reduced. In a preferred aspect, for example, the wound body is stored for a predetermined period of time under an atmospheric pressure at a place where the temperature and humidity can be controlled. The temperature condition to store the wound body is not limited in particular because the temperature condition can change depending on, for example, the drying condition in the preparing step, the amount of moisture remaining in the wound body in the manufacturing step, and the like. In some embodiments, the temperature to store the wound body is preferably room temperature (20 to 30°C) and more preferably 23 to 25°C. The humidity to store the wound body is preferably 10 to 50 %RH and more preferably 10 to 30 %RH. In one example, the wound body is preferably placed at room temperature under the atmospheric pressure in an environment with a humidity of 10 to 50 %RH. The storing time is preferably 24 hours or more (for example, 24 to 240 hours) and more preferably 24 to 72 hours.

In this step, it is preferable that the wound body be placed under the environment where the moisture exists until the amount of moisture in the end part of the wound body in the winding axis WL direction becomes more than the amount of moisture in the central part of the wound body in the winding axis WL direction. Since the wound body has the roll shape, the moisture easily exits from both end parts in the winding axis WL direction in the drying step (step 5) to be described below and the drying is easy. Therefore, when the amount of moisture in the end part is more than that in the central part, the electrode body 20 whose amount of moisture is homogeneous in the winding axis WL direction is obtained easily after the drying step to be described below.

In the accommodating step (step 4), the wound body obtained above is accommodated in the case 10. Specifically, first, the positive electrode second current collecting part 52 is joined to the positive electrode tab group 23 of the wound body and the negative electrode second current collecting part 62 is joined to the negative electrode tab group 25. Next, typically, the wound body is accommodated inside the exterior body 12 through the opening 12h in the environment with the moisture controlled (for example in a glove box). Next, a sealing plate assembly in which the sealing plate 14, the positive electrode terminal 30, the negative electrode terminal 40, the positive electrode first current collecting part 51 of the positive electrode current collecting part 50, the negative electrode first current collecting part 61 of the negative electrode current collecting part 60, the positive electrode insulating member 70, the negative electrode insulating member 80, and the two gaskets 90 are integrated is prepared. Next, the positive electrode second current collecting part 52 is joined (for example, joined by welding) to the positive electrode first current collecting part 51 of the sealing plate assembly. Thus, the positive electrode 22 of the electrode body 20 is electrically connected to the positive electrode terminal 30. Similarly, the negative electrode second current collecting part 62 is joined (for example, joined by welding) to the negative electrode first current collecting part 61 of the sealing plate assembly. Thus, the negative electrode 24 of the electrode body 20 is electrically connected to the negative electrode terminal 40. In this manner, the sealing plate assembly and the electrode body 20 are integrated.

Next, the sealing plate 14 is welded at the periphery of the opening 12h of the exterior body 12 to integrate the exterior body 12 and the sealing plate 14. Thus, the case 10 is constructed and an accommodation body is obtained. Note that the term "accommodation body" in this specification refers to a united object (before liquid injection) that includes the wound body and the case 10 to accommodate the wound body and that does not include the nonaqueous electrolyte solution.

In some embodiments, the amount of moisture in the wound body before the drying step (the arithmetic average of the central part moisture amount and the end part moisture amount) is preferably 180 to 220 ppm by adjusting the moisture in the moisture absorbing step (step 3), for example.

In the drying step (step 5), the wound body is dried. In this embodiment, the accommodation body is dried with the liquid injection hole 15 opened, so that the moisture inside the case 10 is removed. In particular, a part of the moisture inside the wound body is removed. The moisture is removed by a conventionally known drying method such as heat drying, vacuum drying, or the like alone or in combination. The heating temperature is preferably set so that the moisture can be evaporated suitably and the separator 26 and the like do not thermally deteriorate. The heating temperature can be set in the range of, for example, 50 to 150°C, although depending on the material of the separator 26, and the like.

In this embodiment, the wound body is dried so that the average of the central part moisture amount Mc and the end part moisture amount Me becomes 80 to 150 ppm and the difference between the central part moisture amount Mc and the end part moisture amount Me becomes less than ±20 ppm. In other words, the drying is finished with a predetermined amount of moisture left in the wound body. Thus, the electrode body 20 with the high thermal stability can be obtained. The drying condition may be adjusted as appropriate so that the amount of moisture satisfies the aforementioned range, and is not limited in particular because the drying condition can vary depending on the amount of moisture in the wound body after the moisture absorbing step (step 3), etc.

In some embodiments, this step preferably includes a preliminary heating step of performing heat drying under the atmospheric pressure and a vacuum drying step of performing vacuum drying in this order. Although not limited in particular, the heating temperature of the preliminary heating step is preferably set to 60°C or more (for example, 60 to 120°C) and more preferably 70°C or more (for example, 70 to 110°C), and still more preferably 100 to 110°C or more. The preliminary heating time is preferably 1 to 10 hours and more preferably 3 to 6 hours.

Although not limited in particular, the vacuum drying temperature in the vacuum drying step is preferably higher than or equal to the heating temperature in the preliminary heating step. The vacuum drying temperature is preferably set to 60°C or more (for example, 60 to 120°C) and more preferably 70°C or more (for example, 70 to 110°C), and still more preferably 100 to 110°C or more. The degree of vacuum in the vacuum drying step is preferably set to be less than or equal to 100 Pa (so-called medium vacuum) in absolute pressure. The vacuum drying time is preferably 1 to 10 hours and more preferably 3 to 6 hours. In this manner, the electrode body 20 in which the predetermined amount of moisture is left on purpose can be obtained.

In the liquid injecting step (step 6), the nonaqueous electrolyte solution is injected into the case 10 including the electrode body 20 (the accommodation body after the drying). Specifically, first, the nonaqueous electrolyte solution is prepared. The nonaqueous electrolyte solution includes the electrolyte salt (for example, LiPF₆) and the nonaqueous solvent (for example, carbonates) as described above and can further include an additive component (additive). The prepared nonaqueous electrolyte solution is injected into the case 10 through the liquid injection hole 15 of the sealing plate 14. The liquid is injected preferably with the inside of the case 10 decompressed in order to improve the impregnation of the electrode body 20 with the nonaqueous electrolyte solution. In this manner, a battery assembly is obtained. In this specification, the term "battery assembly" refers to an intermediate object assembled up to the state before the initial charging step (step 7) is performed in the manufacturing process for the battery 100.

It is preferable to perform the pressurizing or vacuuming as appropriate in order to improve the impregnation of the electrode body 20, particularly the central part in the winding axis WL direction, with the nonaqueous electrolyte solution after the liquid injection. In one example, it is preferable to perform at least one of the following operations: an operation in which the battery assembly is accommodated in a chamber in which the pressure can be regulated, and in a state where the liquid injection hole 15 is opened (in other words, a state where there is no pressure difference between the inside and the outside of the case 10), the inside of the chamber is decompressed at least once and in the vacuum state, the battery assembly is held for a predetermined time; and an operation in which the pressure is applied in the chamber at least once and the battery assembly is held in the pressurized state for a predetermined time.

In the initial charging step (step 7), the battery assembly is charged until at least a part of the nonaqueous electrolyte solution is decomposed. The battery assembly can be charged similarly to the conventional charging. Typically, an external power source is connected between the positive electrode terminal and the negative electrode terminal of the battery assembly, and charging is performed until the voltage between the positive and negative electrode terminals becomes a predetermined attainment voltage. The attainment voltage is set so that at least a part of the nonaqueous electrolyte solution (for example, the nonaqueous solvent or additive) is electrically decomposed. **In** one example, in a case where the negative electrode active material is a carbon material, the attainment voltage may be set to about 2.5 V or more, preferably 3 V or more, for example 3.5 V or more, and 4 V or more. The charging rate may be, for example, about 0.1 C to 2 C. For example, the charging may be performed once, or repeated twice or more with the discharging conducted between the charging processes. Thus, by the initial charging, the film (SEI film) including the decomposition product of the nonaqueous electrolyte solution is formed on the surface of the negative electrode active material layer 24a.

**In** the defoaming step (step 8), after the initial charging step, the gas in the case 10, for example air, gas generated by the decomposition of the nonaqueous electrolyte solution in the initial charging step, and the like are discharged to the outside of the case 10. The gas can be discharged by, for example, vacuuming the inside of the case 10.

**In** the sealing step (step 9), the liquid injection hole 15 is sealed with the sealing member 16. The liquid injection hole 15 is sealed preferably with the inside of the case 10 decompressed. Thus, the case 10 is hermetically sealed (closed).

**In** the aging step (step 10), the battery assembly with the liquid injection hole 15 sealed is held for a predetermined aging period under a predetermined temperature environment. The aging temperature is preferably 25 to 70°C, and may be, for example, room temperature (about 25°C ± 10°C). The aging period can vary depending on the aging temperature or the like, for example, and is preferably 24 hours or more. **In** this step, it is preferable to restrict the battery assembly from the thickness direction X (the thickness direction of the electrode body 20) and hold the battery assembly with a predetermined restriction load applied thereto. In this case, the restriction load may be 1 to 6 kN. The battery 100 can be manufactured suitably as above.

### <Application of battery 100>

The battery 100 is usable in various applications, and can be suitably used as a motive power source for a motor (power source for driving) that is mounted in a vehicle such as a passenger car or a truck because of having the high capacity and the excellent thermal stability, for example. The vehicle is not limited to a particular type, and may be, for example, a plug-in hybrid electric vehicle (PHEV), a hybrid electric vehicle (HEV), or a battery electric vehicle (BEV). The battery 100 can also be suitably used as a battery pack in which the plurality of batteries 100 are arranged in a predetermined arrangement direction and a load is applied from the arrangement direction by a restriction mechanism.

Several Examples relating to the present disclosure will be explained below, but the present disclosure is not meant to be limited to these Examples.

In this test example, a plurality of battery assemblies (Examples 1 to 3 and Comparative Example 1 and 2) with the same structure were constructed and the thermal stability when the drying conditions of the electrode bodies (the amount of moisture in the electrode bodies) were varied was examined.

### <Manufacture of secondary battery>

First, in the preparing step (step 1), the positive electrode with a band shape and the negative electrode with a band shape were prepared. As for the positive electrode, first, the positive electrode mixture slurry (solid content ratio 79 mass%) was prepared in such a way that LiNi_{0.6}Co_{0.2}Mn_{0.2}O₂ as the positive electrode active material, a carbon material as the conductive material, and PVdF as the binder were mixed in a mass ratio of positive electrode active material:conductive material:PVdF = 97.5:1.5:1 and NMP as the solvent was added thereto. Next, the prepared positive electrode mixture slurry was applied to the positive electrode current collector (aluminum foil) and dried; thus, the positive electrode active material layer was formed. In this manner, the positive electrode with a band shape was obtained.

As for the negative electrode, first, the negative electrode mixture slurry (solid content ratio 56 mass%) was prepared in such a way that graphite as the negative electrode active material and SBR and CMC as the binder were mixed in a mass ratio of negative electrode active material:SBR:CMC = 98:1:1 and ion exchanged water as the solvent was added thereto. Next, the prepared negative electrode mixture slurry was applied by a width of 285 mm to the negative electrode current collector (copper foil) and dried; thus, the negative electrode active material layer was formed. In this manner, the negative electrode was obtained.

Next, in the manufacturing step (step 2), a heat resistance separator in which a functional layer containing alumina and PVdF (a layer serving as both a heat resistance layer and an adhesive layer) was provided on one surface of a porous sheet made of PE was prepared as the separator. Next, the manufactured positive electrode and negative electrode were stacked through the separator and wound into the flat shape, so that the wound body in a roll shape (a turn per fold, 33 turns in total) was manufactured.

Next, in the moisture absorbing step (step 3), the manufactured wound body in the roll shape was stored in a storage cabinet with a humidity of 10 %RH for 24 hours at room temperature (25°C) under the atmospheric pressure so that the wound body absorbed moisture from the end part thereof in the winding axis direction. Thus, the amount of moisture in the wound body (the arithmetic average of the central part moisture amount and the end part moisture amount) was adjusted to about 180 to 190 ppm. Next, in the accommodating step (step 4), the wound body with the amount of moisture adjusted was accommodated in the case and the accommodation body was obtained.

Next, in the drying step (step 5), the accommodation bodies according to Examples 1 to 3 and Comparative Example 1 were dried under the conditions shown in Table 1 with the injection holes opened, so that the wound bodies in the cases were dried. For example, in Example 1, the preliminary heating (heating temperature: 105°C, preliminary heating time: 4 hours) was followed by the vacuum drying (vacuum drying temperature: 105°C, degree of vacuum: 100 Pa, and vacuum drying time: 220 minutes). The accommodation body according to Comparative Example 2 was not subjected to this step.

Next, in the liquid injecting step (step 6), the nonaqueous electrolyte solution was injected into the accommodation body and the battery assembly was obtained. As the nonaqueous electrolyte solution, a nonaqueous electrolyte solution in which LiPF₆ as the electrolyte salt was contained by 13.3 mass% in a mixed solvent (nonaqueous solvent) containing EC, DMC, and EMC in a mass ratio of 29.1:31.5:22.4 was used in each example.

Subsequently, in the initial charging step (step 7), constant-current charging was performed at a charging rate of 1 C to 3 V. Next, in the defoaming step (step 8), the inside of the case was decompressed to -0.09 MPa. Next, in the aging step (step 10), the battery assembly after the initial charging to which a restriction load of 4 kN was applied was held at room temperature (25°C) for five days or more. In this manner, a lithium ion secondary battery was manufactured.

### <Measurement of the amount of moisture in electrode body>

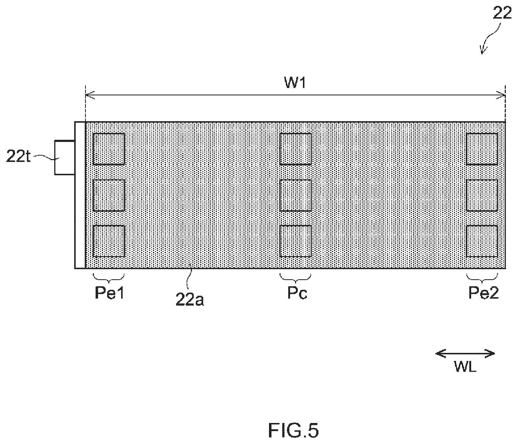

First, the lithium ion secondary battery was disassembled in a dry booth with a dry air atmosphere and the electrode body was extracted from the case. Then, the winding of the electrode body was unfastened, so that the positive electrode and the negative electrode located at the 17th turn (the intermediate peripheral part in the longitudinal direction) were cut out for each turn. Next, as illustrated in FIG. 5, three test pieces each with a size of 20 mm × 20 mm were cut out at the central part (Pc in FIG. 5) and both end parts (Pe1, Pe2 in FIG. 5) of the positive electrode in the winding axis WL direction. Similarly, three test pieces each with a size of 20 mm × 20 mm were cut out at the central part and both end parts of the negative electrode in the winding axis direction. Note that the end part is about 5 mm on the inside from the endmost part of the active material layer in the winding axis direction. Next, a set of three test pieces was set in a Karl-Fisher moisture meter (model: CA-310, manufactured by Nittoseiko Analytech Co., Ltd.). Then, AQUAMICRON (registered trademark) manufactured by Mitsubishi Chemical Group Corporation was used as a Karl-Fisher reagent, and the moisture was evaporated from the test piece at a vaporizing temperature of 150°C for a vaporizing time of 2 minutes; thus, the amount of moisture reacted with the Karl-Fisher reagent was quantized in accordance with a coulometric titration method.

Next, for each of the positive electrode and the negative electrode, the amount of moisture in "the end part" was obtained by the arithmetic average of the quantized values of both end parts (Pe1, Pe2 in FIG. 5). Then, by the arithmetic average of the amount of moisture in the end part of the positive electrode and the amount of moisture in the end part of the negative electrode, "the end part moisture amount Me in the electrode body" was calculated. In addition, by the arithmetic average of the amount of moisture in the central part of the positive electrode and the amount of moisture in the central part of the negative electrode, "the central part moisture amount Mc in the electrode body" was calculated. The results are shown in Table 1.

### <Evaluation of the amount of heat generation>

First, in a glove box with an Ar gas atmosphere, the discharged battery was disassembled. Next, the electrolyte solution was extracted and the positive electrode and the negative electrode were extracted in a size of 50 mm × 115 mm each. Subsequently, the positive electrode and the negative electrode were disposed to face each other with the separator therebetween, and sealed into an aluminum pouch together with the extracted electrolyte solution, so that a laminate cell was manufactured. Next, the manufactured laminate cell was fully charged and then disassembled, and the negative electrode mixture was cut off from the negative electrode. Then, the cutoff negative electrode mixture was accommodated in a sample container (SUS pan) together with the electrolyte solution. This sample container was sealed by pressing at 20 MPa, and then set to a differential scanning calorimetry (DSC, manufactured by Shimadzu Corporation, model type: DSC-60A) together with a standard material (Al₂O₃, 2 mg). Subsequently, under an inert atmosphere, the temperature was kept at 30°C for 85 minutes and was increased at a temperature increasing rate of 2 °C/min from 30°C to 350°C, and a DSC chart was obtained. From the integrated value (peak area value) between 100 and 180°C in the obtained DSC chart, the amount of heat generation (J) was calculated. The results are shown in Table 1.

**Table 1**

| | Preliminary heating | | Vacuum drying | | | The number of times of repetitions | Measurement of the amount of moisture | | | | The amount of heat generation (J/cm²) |
|---|---|---|---|---|---|---|---|---|---|---|---|
| | Temperature (°C) | Time (min) | Temperature (°C) | Degree of vacuum (Pa) | Time (min) | | Central part moisture amount Mc (ppm) | End part moisture amount Me (ppm) | Average | Difference Mc-Mc | |
| Example 1 | 105 | 240 | 105 | 100 | 220 | 1 | 92.5 | 81.9 | 87.2 | 10.6 | 2.08 |
| Example 2 | 80 | 240 | 80 | 100 | 220 | 1 | 136.5 | 129.2 | 132.9 | 7.4 | 2.49 |
| Example 3 | 70 | 240 | 70 | 100 | 220 | 1 | 153.1 | 136.7 | 144.9 | 16.4 | 2.94 |
| Comparative Example 1 | 105 | 240 | 105 | 100 | 220 | 2 | 75.9 | 67.3 | 71.6 | 8.6 | 3.38 |
| Comparative Example 2 | - | - | - | - | - | - | 184.7 | 188.0 | 186.4 | -3.4 | 3.26 |

As shown in Table 1, the amount of moisture in the electrode body (average) was relatively large in Comparative Example 2 where the drying step was not performed. In Comparative Example 1 where the drying step was repeated twice, the amount of moisture in the electrode body (average) was relatively small. In Comparative Examples 1 and 2, the amount of heat generation was relatively large. In contrast to these Comparative Examples, in all of Examples 1 to 3 in which the average of the central part moisture amount Mc and the end part moisture amount Me was 80 to 150 ppm and the difference between the central part moisture amount Mc and the end part moisture amount Me is less than ±20 ppm, the amount of heat generation was suppressed and the thermal stability was high. These results represent the significance of the art disclosed herein.

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified example, and the other modified example can be added to the aforementioned embodiment. Additionally, the technical feature may be deleted as appropriate unless such a feature is described as an essential element.

As described above, the following items are given as specific aspects of the art disclosed herein.
Item 1: The electrode body including the positive electrode with a band shape and the negative electrode with a band shape that are stacked in the insulated state and wound in the longitudinal direction, in which the negative electrode includes the negative electrode active material layer whose width in the winding axis direction that is orthogonal to the longitudinal direction is 200 mm or more, the positive electrode includes the positive electrode active material layer whose width in the winding axis direction is less than or equal to that of the negative electrode active material layer, and the following procedures are performed:
   (procedure 1) the positive electrode and the negative electrode existing in the intermediate peripheral part in the longitudinal direction are cut out for each turn;
   (procedure 2) in the positive electrode active material layer of the positive electrode, the test piece is cut out at each of the central part and both the end parts in the winding axis direction and in the negative electrode active material layer of the negative electrode, the test piece is cut out at each of the central part and both the end parts in the winding axis direction;
   (procedure 3) in each test piece cut out in the procedure 2, the amount of moisture is quantized at the heating temperature from room temperature to 150°C in accordance with the Karl-Fisher method; and
   (procedure 4) the average of the amount of moisture in the central part of the positive electrode active material layer and the amount of moisture in the central part of the negative electrode active material layer is calculated as the "central part moisture amount" in the electrode body and the average of the amount of moisture in both the end parts of the positive electrode active material layer and the amount of moisture in both the end parts of the negative electrode active material layer is calculated as the "end part moisture amount" in the electrode body, in which the average of the central part moisture amount and the end part moisture amount is 80 ppm or more and 150 ppm or less and the difference between the central part moisture amount and the end part moisture amount is less than ±20 ppm.
Item 2: The electrode body according to Item 1, in which the central part moisture amount is more than the end part moisture amount.
Item 3: The manufacturing method for the electrode body according to Item 1 or 2, the manufacturing method including: the preparing step of preparing the negative electrode with a band shape including the negative electrode active material layer whose width in the winding axis direction is 200 mm or more, and the positive electrode with a band shape including the positive electrode active material layer whose width in the winding axis direction is less than or equal to that of the negative electrode active material layer; the manufacturing step of manufacturing the wound body by stacking and winding the positive electrode with a band shape and the negative electrode with a band shape in the insulated state; and the drying step of drying the wound body, in which in the drying step, the wound body is dried so that the average of the central part moisture amount and the end part moisture amount becomes 80 ppm or more and 150 ppm or less and the difference between the central part moisture amount and the end part moisture amount becomes less than ±20 ppm.
Item 4: The manufacturing method according to Item 3, further including, between the manufacturing step and the drying step, the moisture absorbing step of absorbing moisture from the end part of the wound body in the winding axis direction by placing the wound body in the environment where moisture exists.
Item 5: The manufacturing method according to Item 4, in which in the moisture absorbing step, the wound body is placed in the environment where moisture exists until the amount of moisture in the end part of the wound body in the winding axis direction becomes more than the amount of moisture in the central part of the wound body in the winding axis direction. Item 6: The manufacturing method according to Item 4 or 5, in which in the moisture absorbing step, the wound body is placed at room temperature under the atmospheric pressure in the environment with a humidity of 10 %RH or more and 50 %RH or less.
Item 7: The manufacturing method according to any one of Items 3 to 6, in which the drying step includes the preliminary heating step of performing the heat drying at 70°C or more and 110°C or less under the atmospheric pressure, and the vacuum drying step of performing the vacuum drying at 70°C or more and 110°C or less after the preliminary heating step.
Item 8: The manufacturing method for the secondary battery, including: the constructing step of constructing the battery assembly including the electrode body that is obtained by the manufacturing method according to any one of Items 3 to 7, the nonaqueous electrolyte solution, and the case that accommodates the electrode body and the nonaqueous electrolyte solution; and the initial charging step of charging the battery assembly until at least a part of the nonaqueous electrolyte solution is decomposed.

## Claims

1. An electrode body (20) comprising a positive electrode (22) with a band shape and a negative electrode (24) with a band shape that are stacked in an insulated state and wound in a longitudinal direction (LD), wherein
the negative electrode (24) includes a negative electrode active material layer (24a) whose width in a winding axis (WL) direction that is orthogonal to the longitudinal direction (LD) is 200 mm or more,
the positive electrode (22) includes a positive electrode active material layer (22a) whose width in the winding axis (WL) direction is less than or equal to that of the negative electrode active material layer (24a), and
the following procedures are performed:
(procedure 1) the positive electrode (22) and the negative electrode (24) existing in an intermediate peripheral part in the longitudinal direction (LD) are cut out for each turn;
(procedure 2) in the positive electrode active material layer (22a) of the positive electrode (22), a test piece is cut out at each of a central part (Pc) and both end parts (Pe1, Pe2) in the winding axis (WL) direction and in the negative electrode active material layer (24a) of the negative electrode (24), a test piece is cut out at each of a central part and both end parts in the winding axis (WL) direction;
(procedure 3) in each test piece cut out in the procedure 2, the amount of moisture is quantized at a heating temperature from room temperature to 150°C in accordance with a Karl-Fisher method; and
(procedure 4) an average of the amount of moisture in the central part (Pc) of the positive electrode active material layer (22a) and the amount of moisture in the central part of the negative electrode active material layer (24a) is calculated as a "central part moisture amount" in the electrode body and an average of the amount of moisture in both the end parts (Pe1, Pe2) of the positive electrode active material layer (22a) and the amount of moisture in both the end parts of the negative electrode active material layer (24a) is calculated as an "end part moisture amount" in the electrode body, in which an average of the central part moisture amount and the end part moisture amount is 80 ppm or more and 150 ppm or less and a difference between the central part moisture amount and the end part moisture amount is less than ±20 ppm.

2. The electrode body (20) according to claim 1, wherein the central part moisture amount is more than the end part moisture amount.

3. A manufacturing method for the electrode body (20) according to claim 1 or 2, the manufacturing method comprising:
a preparing step of preparing the negative electrode (24) with a band shape including the negative electrode active material layer (24a) whose width in the winding axis (WL) direction is 200 mm or more, and the positive electrode (22) with a band shape including the positive electrode active material layer (22a) whose width in the winding axis (WL) direction is less than or equal to that of the negative electrode active material layer (24a);
a manufacturing step of manufacturing a wound body by stacking and winding the positive electrode (22) with a band shape and the negative electrode (24) with a band shape in the insulated state; and
a drying step of drying the wound body, wherein in the drying step, the wound body is dried so that the average of the central part moisture amount and the end part moisture amount becomes 80 ppm or more and 150 ppm or less and the difference between the central part moisture amount and the end part moisture amount becomes less than ±20 ppm.

4. The manufacturing method according to claim 3, further comprising, between the manufacturing step and the drying step, a moisture absorbing step of absorbing moisture from an end part of the wound body in the winding axis (WL) direction by placing the wound body in an environment where moisture exists.

5. The manufacturing method according to claim 4, wherein in the moisture absorbing step, the wound body is placed in the environment where moisture exists until the amount of moisture in the end part of the wound body in the winding axis (WL) direction becomes more than the amount of moisture in the central part of the wound body in the winding axis (WL) direction.

6. The manufacturing method according to claim 4 or 5, wherein in the moisture absorbing step, the wound body is placed at room temperature under an atmospheric pressure in an environment with a humidity of 10 %RH or more and 50 %RH or less.

7. The manufacturing method according to any one of claims 3 to 6, wherein the drying step includes a preliminary heating step of performing heat drying at 70°C or more and 110°C or less under the atmospheric pressure, and a vacuum drying step of performing vacuum drying at 70°C or more and 110°C or less after the preliminary heating step.

8. A manufacturing method for a secondary battery (100), comprising:
a constructing step of constructing a battery assembly including the electrode body (20) that is obtained by the manufacturing method according to any one of claims 3 to 7, a nonaqueous electrolyte solution, and a case (10) that accommodates the electrode body (20) and the nonaqueous electrolyte solution; and
an initial charging step of charging the battery assembly until at least a part of the nonaqueous electrolyte solution is decomposed.
